# EUROPEAN PATENT APPLICATION

(11) **EP 3 908 039 A1**
(43) Date of publication of application: **10.11.2021**
(21) Application number: 20747888.4
(22) Date of filing: 16.01.2020
(51) Int. Cl.: H04W 28/14, H04W 72/04

(54) **DATA SENDING METHOD AND TERMINAL DEVICE**

(30) Priority: 31.01.2019 CN 201910102506; 23.04.2019 CN 201910330874
(71) Applicant: Huawei Technologies Co., Ltd., Shenzhen, Guangdong 518129 (CN)
(72) Inventor: LI, Yanbin, Shenzhen, Guangdong 518129 (CN); YU, Xiaoyong, Shenzhen, Guangdong 518129 (CN)
(74) Representative: Goddar, Heinz J.
(86) International application number: PCT/CN2020/072498
(87) International publication number: WO 2020/156211

(57) **Abstract**

This application provides a data transmission method and a terminal device. The method includes the following steps: A terminal device determines that a first connection meets a preset condition. The preset condition includes one or more of the following: Signal strength received by the terminal device on the first connection is less than a strength threshold; and transmit power of the terminal device on the first connection is greater than or equal to a power threshold. Then the terminal device increases an amount of data to be transmitted on a second connection while decreasing an amount of data to be transmitted on the first connection. The method can be applied to uplink data splitting in a dual-connectivity or multi-connectivity system based on an NSA architecture, can improve reliability and efficiency of an uplink service, and can reduce power consumption of the terminal device.

## Description

This application claims priority to Chinese Patent Application No. 201910102506.6, filed with the China National Intellectual Property Administration on January 31, 2019 and entitled "METHOD AND DEVICE FOR SELECTING DATA TRANSMISSION PATH IN OPTION 3X SCENARIO", and Chinese Patent Application No. 201910330874.6, filed with the China National Intellectual Property Administration on April 23, 2019, and entitled "DATA TRANSMISSION METHOD AND TERMINAL DEVICE", which are incorporated herein by reference in their entireties.

### TECHNICAL FIELD

This application relates to the communications field, and in particular, to a data transmission method and a terminal device.

### BACKGROUND

In a dual-connectivity system using a non-standalone (non-standalone, NSA) networking architecture, when a total amount of uplink data is greater than or equal to an uplink split threshold, a terminal device may dynamically adjust, in a split (split) manner, an amount of uplink data to be transmitted on two connections. For example, in a dual-connectivity (E-UTRA-NR dual connectivity, EN-DC) communications system based on an evolved universal mobile telecommunications system terrestrial radio access (evolved-universal mobile telecommunications system terrestrial radio access, E-UTRA) technology-new radio (new radio, NR) technology, such as an EN-DC dual-connectivity communications system based on an option 3X or option 3 architecture, when a total amount of uplink data of a terminal device is greater than or equal to an uplink data amount threshold, for example, ul-DataSplitThreshold, the terminal device may separately transmit a part of uplink data on a connection corresponding to each of a master cell group (master cell group, MCG) and a secondary cell group (secondary cell group, SCG).

However, the foregoing split solution is determined on a basis of considering only the total amount of uplink data of the terminal device, and does not consider other factors, such as mobility of the terminal device, interference, and noise. Consequently, on a connection with degraded channel quality, quality of an uplink service may deteriorate. For example, a problem that a bit error rate increases is caused. In addition, to reduce the bit error rate, the terminal device may further have to increase a quantity of retransmission times and/or increase transmit power, or use other means, causing an increase of power consumption of the terminal device.

### SUMMARY

This application provides a data transmission method and a terminal device, to dynamically adjust an amount of uplink data to be transmitted by a terminal device on two connections in a dual-connectivity communications system based on a non-standalone networking architecture, thereby improving reliability and efficiency of uplink communication in the dual-connectivity communications system based on the non-standalone networking architecture, and reducing power consumption of the terminal device.

According to a first aspect, a data transmission method is provided. The data transmission method includes the following steps: A terminal device determines that a first connection meets a preset condition. The preset condition includes one or more of the following: Signal strength received by the terminal device on the first connection is less than a strength threshold; and transmit power of the terminal device on the first connection is greater than or equal to a power threshold. Then the terminal device increases an amount of data to be transmitted on a second connection while decreasing an amount of data to be transmitted on the first connection.

According to the data transmission method provided in this embodiment of this application, when the signal strength received by the terminal device on the first connection is less than the strength threshold, or the transmit power of the terminal device on the first connection is greater than or equal to the power threshold, the terminal device can increase the amount of data to be transmitted on the second connection while decreasing the amount of data to be transmitted on the first connection. To be specific, the terminal device can dynamically adjust, based on radio channel quality or transmit power on the two connections, the amounts of data to be transmitted on the two connections. Therefore, a problem that poor radio channel quality on one connection causes poor uplink communication quality on the connection can be avoided, a bit error rate of uplink data can be reduced, and reliability and efficiency of uplink communication in a dual-connectivity communications system based on a non-standalone networking architecture are improved. In addition, a quantity of uplink retransmission times can be reduced, uplink transmit power is reduced, and power consumption of the terminal device is reduced.

For example, that signal strength received by the terminal device on the first connection is less than a strength threshold may include one or more of the following: Reference signal received power RSRP received by the terminal device on the first connection is less than an RSRP threshold; reference signal received quality RSRQ received by the terminal device on the first connection is less than an RSRQ threshold; and a received signal strength indicator RSSI received by the terminal device on the first connection is less than an RSSI threshold.

Optionally, the preset condition may further include one or more of the following: A falling slope of the signal strength received by the terminal device on the first connection is greater than a falling slope threshold; and a rising slope of the transmit power of the terminal device on the first connection is greater than a rising slope threshold.

In a possible design method, that the terminal device increases an amount of data to be transmitted on a second connection while decreasing an amount of data to be transmitted on the first connection may include: if the terminal device determines that a data amount of to-be-transmitted data is less than or equal to a data amount threshold, the terminal device transmits all the to-be-transmitted data on the second connection.

In an actual application, the to-be-transmitted data may include first to-be-transmitted data and second to-be-transmitted data. Therefore, in another possible design method, that the terminal device increases an amount of data to be transmitted on a second connection while decreasing an amount of data to be transmitted on the first connection may include: if the terminal device determines that the data amount of the to-be-transmitted data is greater than the data amount threshold, the terminal device transmits the second to-be-transmitted data on the second connection while transmitting the first to-be-transmitted data on the first connection.

Optionally, a data amount of the second to-be-transmitted data may be less than or equal to the data amount threshold. The data amount threshold may be determined by the terminal device based on a bearer capability of the second connection. It is easy to understand that the data amount threshold may be equal to a maximum amount of data that can be carried by the second connection. Optionally, the data amount threshold may alternatively be less than a maximum amount of data that can be carried by the second connection, so that resources are reserved for the terminal device to transmit signaling on the second connection.

According to a second aspect, a terminal device is provided. The terminal device includes a processing module, a receiving module, and a transmission module. The processing module is configured to determine that a first connection meets a preset condition. The preset condition includes one or more of the following: Signal strength received by the receiving module on the first connection is less than a strength threshold; and transmit power of the transmission module on the first connection is greater than or equal to a power threshold. The processing module is further configured to control the transmission module to increase an amount of data to be transmitted on a second connection while controlling the transmission module to decrease an amount of data to be transmitted on the first connection.

For example, that signal strength received by the receiving module on the first connection is less than a strength threshold may include one or more of the following: Reference signal received power RSRP received by the receiving module on the first connection is less than an RSRP threshold; reference signal received quality RSRQ received by the receiving module on the first connection is less than an RSRQ threshold; and a received signal strength indicator RSSI received by the receiving module on the first connection is less than an RSSI threshold.

Optionally, the preset condition may further include one or more of the following: A falling slope of the signal strength received by the receiving module on the first connection is greater than a falling slope threshold; and a rising slope of the transmit power of the transmission module on the first connection is greater than a rising slope threshold.

In a possible design, if determining that a data amount of to-be-transmitted data is less than or equal to a data amount threshold, the processing module is further configured to control the transmission module to transmit all the to-be-transmitted data on the second connection.

In an actual application, the to-be-transmitted data may include first to-be-transmitted data and second to-be-transmitted data. Therefore, in another possible design, if determining that the data amount of the to-be-transmitted data is greater than the data amount threshold, the processing module is further configured to control the transmission module to transmit the second to-be-transmitted data on the second connection while controlling the transmission module to transmit the first to-be-transmitted data on the first connection.

Optionally, a data amount of the second to-be-transmitted data may be less than or equal to the data amount threshold. The terminal device may determine the data amount threshold based on a bearer capability of the second connection. It is easy to understand that the data amount threshold may be equal to a maximum amount of data that can be carried by the second connection. Optionally, the data amount threshold may alternatively be less than a maximum amount of data that can be carried by the second connection, so that resources are reserved for the terminal device to transmit signaling on the second connection.

It should be noted that a chip or a system on chip disposed in the terminal device may also be considered as the foregoing terminal device. This is not limited in this application.

According to a third aspect, a terminal device is provided. The terminal device is configured to perform the data transmission method according to any possible implementation of the first aspect.

According to a fourth aspect, another terminal device is provided. The terminal device includes a processor and a memory. The memory is configured to store an instruction; and the processor is configured to invoke and execute the instruction in the memory, so that the terminal device performs the data transmission method according to any possible implementation of the first aspect.

According to a fifth aspect, still another terminal device is provided. The terminal device includes a processor, a memory, and a transceiver. The transceiver is configured to receive and transmit data; the memory is configured to store an instruction; and the processor is configured to invoke and execute the instruction in the memory, so that the terminal device performs the data transmission method according to any possible implementation of the first aspect.

According to a sixth aspect, a communications system is provided. The communications system includes one or more of the foregoing terminal devices and a network device.

According to a seventh aspect, a computer-readable storage medium is provided. The computer storage medium stores a computer-readable instruction. When a computer reads and executes the computer-readable instruction, the computer is enabled to perform the data transmission method according to any possible implementation of the first aspect.

According to an eighth aspect, a computer program is provided. When the computer program is executed on a computer, the computer is enabled to implement the data transmission method according to any possible implementation of the first aspect.

### BRIEF DESCRIPTION OF DRAWINGS

FIG. 1 is a schematic architectural diagram of a dual-connectivity communications system based on a non-standalone networking architecture according to an embodiment of this application;
FIG. 2 is a schematic structural diagram 1 of a terminal device according to an embodiment of this application;
FIG. 3 is a schematic flowchart of a data transmission method according to an embodiment of this application;
FIG. 4 is a schematic diagram of a protocol architecture of a terminal device based on an EN-DC option 3X architecture; and
FIG. 5 is a schematic structural diagram 2 of a terminal device according to an embodiment of this application.

### DESCRIPTION OF EMBODIMENTS

With reference to the accompanying drawings, the following describes in detail a data transmission method and a terminal device provided in the embodiments of this application.

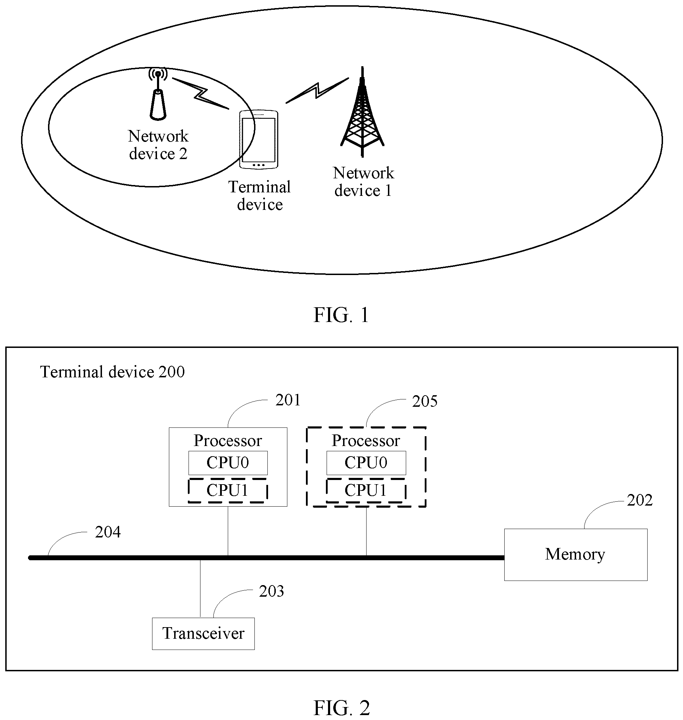

A data transmission method provided in an embodiment of this application may be applied to a communications system shown in FIG. 1. The communications system may be any dual-connectivity system deployed in a non-standalone networking mode.

As shown in FIG. 1, the communications system may include a terminal device, a network device 1, and a network device 2. The terminal device in FIG. 1 is a terminal device having a dual-connectivity (dual connectivity, DC) capability, and is mainly configured to connect, by using an air interface, to at least one network device deployed by an operator, to receive a network service. It is easy to understand that two transceivers or two transceiver chains usually need to be installed for the terminal device having the dual-connectivity capability. The network device is mainly configured to implement functions of a radio protocol stack, resource scheduling, radio resource management, radio access control, and mobility management.

Dual connectivity may be that the terminal device communicates with network devices of different standards simultaneously, or may be that the terminal device communicates with different network devices of a same standard simultaneously, or may be that the terminal device communicates with different cells of a same network device. This is not limited in this embodiment of this application.

For example, a non-standalone networking mode of 5th Generation (5th generation, 5G) NR, for example, an EN-DC dual-connectivity communications system based on an option 3X or option 3 architecture, is often selected in a first phase of 5G system deployment. For example, in the EN-DC dual-connectivity communications system, the network device 1 may be an evolved NodeB (evolved NodeB, eNB) in a long term evolution (long term evolution, LTE) system, the network device 2 may be a g NodeB (g NodeB, gNB) in the NR system, and the terminal device may communicate with the eNB and the gNB simultaneously. For another example, both the network device 1 and the network device 2 may be gNBs in the NR system, and the terminal device may communicate with the two gNBs simultaneously. For another example, the network device 1 and the network device 2 may be co-sited for deployment, that is, the network device 1 and the network device 2 may be a same base station, the base station may include at least two cells, and the dual connectivity may alternatively be that the terminal device communicates with two cells of the base station simultaneously. Certainly, in a co-site deployment case, the at least two cells may be cells supporting a same standard, or may be cells supporting different standards. This is not limited in this embodiment of this application.

The network device may be an access network device having a wireless transceiver function or a chip disposed in an access network device. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), or an access point (access point, AP), a wireless relay node, a wireless backhaul node, a transmission point (transmission and reception point TRP, or transmission point TP) in a Wireless Fidelity (wireless fidelity, WIFI) system, or the like, or may be a gNB or a transmission point (TRP or TP) in a 5G system, for example, NR, or an antenna panel or a group of antenna panels (including a plurality of antenna panels) of a base station in a 5G system, or may be a network node constituting a gNB or a transmission point, such as a baseband unit (BBU) or a distributed unit (distributed unit, DU).

In some deployments, the gNB may include a centralized unit (centralized unit, CU) and a distributed unit (distributed unit, DU). The gNB may further include a radio unit (radio unit, RU). The CU implements some functions of the gNB, and the DU implements other functions of the gNB. For example, the CU implements functions of a radio resource control (radio resource control, RRC) layer and a Packet Data Convergence Protocol (packet data convergence protocol, PDCP) layer, and the DU implements functions of a radio link control (radio link control, RLC) layer, a media access control (media access control, MAC) layer, and a physical (physical, PHY) layer. Because information of the RRC layer is eventually changed to information of the physical layer or is changed from information of the physical layer, it may also be considered that higher layer signaling such as RRC layer signaling is transmitted by the DU or transmitted by the DU+RU in this architecture. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, a user apparatus, or the like. The terminal in this embodiment of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in this embodiment of this application. In this application, the terminal device and a chip that may be disposed in the terminal device are collectively referred to as the terminal device.

It should be noted that, due to reasons such as a coverage capability of the network device and mobility of the terminal device, signal quality on two connections between the terminal device and the two network devices may be constantly changing. For example, signal quality and/or strength on one connection deteriorate and/or deteriorates, or signal quality and/or strength change and/or changes sharply. Consequently, quality of an uplink service on the connection deteriorates. For example, an uplink bit error rate increases. This further causes the terminal device to increase a quantity of retransmission times and/or to increase transmit power, and hence causes power consumption of the terminal device to increase.

For example, as shown in FIG. 1, it is assumed that the network device 1 is an eNB in the LTE system, and the network device 2 is a gNB in the NR system. A frequency band supported by the NR system is generally higher than a frequency band supported by the LTE system, that is, a coverage capability of the gNB is usually lower than a coverage capability of the eNB. Therefore, non-standalone networking is completed in a network deployment mode usually by using the eNB as a primary base station (which may also be referred to as a macro base station) and using the gNG as a secondary base station (which may also be referred to as a micro base station). It is easy to understand that in an edge coverage area of the gNB, an NR signal between the terminal device and the gNB deteriorates. As a result, the gNB may fail to correctly receive an uplink signal transmitted by the terminal device, that is, an NR bit error rate increases. To reduce the NR bit error rate, the terminal device may increase the quantity of retransmission times and/or increase the transmit power, but this further increases power consumption of the terminal device.

It is easy to understand that even if the network device 1 and the network device 2 use a same standard, for example, both the network devices 1 and 2 are gNBs, if a frequency band of the network device 1 is lower than a frequency band of the network device 2, the foregoing problem that quality of an uplink service between the terminal device and the micro base station is relatively poor due to inconsistency of coverage capabilities between the macro base station and the micro base station may occur.

It should be noted that FIG. 1 is merely an example architectural diagram. In addition to the functional units shown in FIG. 1, the communications system may further include other functional units. This is not limited in this embodiment of this application.

The data transmission method provided in this embodiment of this application may be applied to a terminal device shown in FIG. 2. The terminal device may be the terminal device in the communications system shown in FIG. 1, or a chip or a system on chip disposed in the terminal device shown in FIG. 1. As shown in FIG. 2, the terminal device may include at least one processor 201, a memory 202, a transceiver 203, and a communications bus 204.

The following describes in detail each component of the terminal device with reference to FIG. 2.

The processor 201 is a control center of the terminal device, and may be one processor, or may be a collective term for a plurality of processing elements. For example, the processor 201 may be a central processing unit (central processing unit, CPU), or an application specific integrated circuit (application specific integrated circuit, ASIC), or may be configured as one or more integrated circuits implementing this embodiment of this application, for example, one or more microprocessors (digital signal processor, DSP) or one or more field programmable gate array (field programmable gate array, FPGA).

The processor 201 may perform various functions of the terminal device 200 by running or executing a software program stored in the memory 202 and invoking data stored in the memory 202.

In some embodiments, the processor 201 may include one or more CPUs, such as a CPU 0 and a CPU 1 shown in FIG. 2.

In other embodiments, the terminal device 200 may include a plurality of processors, for example, the processor 201 and a processor 205 shown in FIG. 2. Each of the processors may be a single-core processor (single-CPU) or may be a multi-core processor (multi-CPU). The processor herein may refer to one or more terminal devices, circuits, and/or processing cores configured to process data (for example, computer program instructions).

The memory 202 may be a read-only memory (read-only memory, ROM) or another type of static storage terminal device that can store static information and instructions or a random access memory (random access memory, RAM) or another type of dynamic storage terminal device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium or another magnetic storage terminal device, or any other medium that can be used to carry or store desired program code in a form of an instruction or a data structure and can be accessed by a computer. This is not limited. The memory 202 may exist independently, and is connected to the processor 201 by using the communications bus 204. Certainly, the memory 202 may also be integrated with the processor 201.

The memory 202 is configured to store a software program for executing the solutions of this application, and the processor 201 controls execution.

The transceiver 203 is configured to communicate with one or more network devices, for example, communicate by using the foregoing two connections. For example, the transceiver 203 may also be configured to communicate with another terminal device, for example, directly communicate with one or more other terminal devices on a sidelink (sidelink, SL). The transceiver 203 may include a receiving unit for implementing a receiving function, and a transmission unit for implementing a transmission function.

The communications bus 204 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

It should be noted that, when the terminal device 200 is a chip or a system on chip disposed in the terminal device shown in FIG. 1, the transceiver 203 may be an input/output circuit or interface of the chip or the system on chip, the communication bus 204 may be a bus in the chip or the system on chip, and the memory 202 may be a memory in the chip or the system on chip or may be a memory located in the terminal device and connected to the input/output interface or circuit of the chip or the system on chip.

A structure of the terminal device shown in FIG. 2 does not constitute a limitation on the terminal device, that is, the terminal device provided in this application may include more or fewer components than those shown in the figure, or some components are combined, or components are arranged differently.

The terminal device 200 may occasionally also be referred to as a communications device, and may be a general-purpose device or a dedicated device. For example, the terminal device 200 may be a portable computer, a palmtop computer (personal digital assistant, PDA), a mobile phone, a tablet computer, a wireless terminal device, an embedded device, or another device having a structure similar to that shown in FIG. 2. A type of the terminal device 200 is not limited in this embodiment of this application.

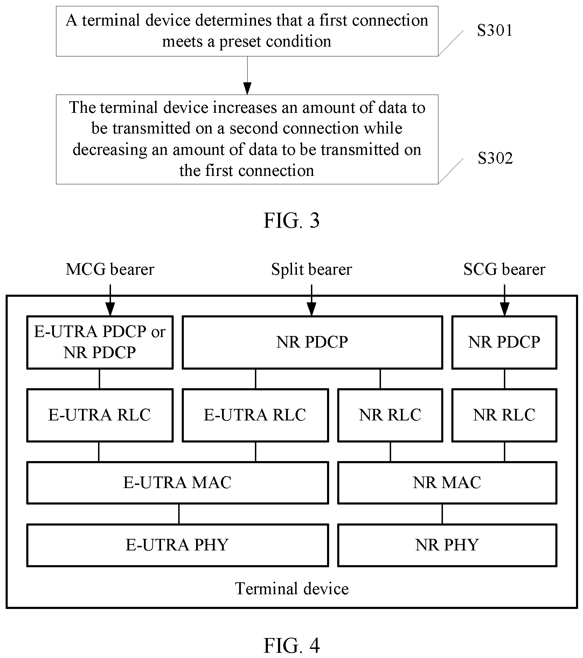

With reference to FIG. 3 and FIG. 4, the following describes in detail a communication method provided in an embodiment of this application.

An embodiment of this application provides a data transmission method, applicable to the communications system shown in FIG. 1. As shown in FIG. 3, the data transmission method includes the following steps.

S301: A terminal device determines that a first connection meets a preset condition.

The preset condition includes one or more of the following:

Signal strength received by the terminal device on the first connection is less than a strength threshold; and
transmit power of the terminal device on the first connection is greater than or equal to a power threshold.

FIG. 4 is a diagram of a protocol architecture of a terminal device based on an EN-DC option 3X dual-connectivity architecture. As shown in FIG. 4, from a perspective of the terminal device, there are the following three types of bearers (bearer) in total: a master cell group (master cell group, MCG) bearer, a secondary cell group (secondary cell group, SCG) bearer, and a split (split) bearer. The bearer may be signaling, data, or signaling and data.

For example, as shown in FIG. 4, for the MCG bearer, an E-UTRA PDCP entity may be configured, or an NR PDCP entity may be configured. It is easy to understand that an E-UTRA RLC entity, an E-UTRA MAC entity, and an E-UTRA PHY entity also need to be configured for the MCG bearer. When the terminal device selects the MCG bearer to transmit signaling and/or data, the configured E-UTRA PDCP entity or NR PDCP entity may deliver the data and/or signaling to the E-UTRA PHY entity through the E-UTRA RLC entity and the E-UTRA MAC entity, and transmit the data and/or signaling to a main node (main node, MN) by using a radio frequency (radio frequency, RF) circuit that can support an LTE frequency band (band).

For example, as shown in FIG. 4, an NR PDCP entity, an NR RLC entity, an NR MAC entity, and an NR PHY entity may be configured for the SCG bearer. When the terminal device selects the SCG bearer to transmit data, the configured NR PDCP entity may deliver the data to the NR PHY entity through the NR RLC entity and the NR MAC entity, and transmit the data to a secondary node (secondary node, SN) by using an RF circuit that supports an NR frequency band.

For example, as shown in FIG. 4, an NR PDCP entity, an NR RLC entity, an NR MAC entity, and an NR PHY entity are configured for the split bearer. In addition, an E-UTRA RLC entity, an E-UTRA MAC entity, and an E-UTRA PHY entity may also be configured for the split bearer. When an amount of uplink data is relatively small, the terminal device may select one of the following two data paths to transmit the uplink data: a data path 1, including an NR RLC entity, an NR MAC entity, and an NR PHY entity; and a data path 2, including an E-UTRA RLC entity, an E-UTRA MAC entity, and an E-UTRA PHY entity. It is easy to understand that when the amount of uplink data is relatively large, for example, when a total amount of uplink data is greater than or equal to an uplink data split threshold, for example, ul-DataSplitThreshold, the terminal device may transmit a part of uplink data on each of the data path 1 and the data path 2 in a split mode, to complete transmission of all uplink data. The total amount of uplink data may be a sum of an amount of to-be-transmitted data of the NR PDCP entity, an amount of to-be-transmitted data of the NR RLC entity, and an amount of to-be-transmitted data of the E-UTRA RLC entity.

For example, that signal strength received by the terminal device on the first connection is less than a strength threshold may include one or more of the following:

Reference signal received power (reference signal receiving power, RSRP) received by the terminal device on the first connection is less than an RSRP threshold;
reference signal received quality (reference signal receiving quality, RSRQ) received by the terminal device on the first connection is less than an RSRQ threshold; and
a received signal strength indicator (received signal strength indication, RSSI) received by the terminal device on the first connection is less than an RSSI threshold.

To further improve accuracy of determining by the terminal device, optionally, the preset condition may further include one or more of the following:

A falling slope of the signal strength received by the terminal device on the first connection is greater than a falling slope threshold; and
a rising slope of the transmit power of the terminal device on the first connection is greater than a rising slope threshold.

For example, the falling slope of the signal strength received by the terminal device on the first connection is used to indicate an attenuation speed of the signal strength received by the terminal device on the first connection, for example, may be represented by an attenuation of the signal strength received by the terminal device on the first connection in a specified time period. The rising slope of the transmit power of the terminal device on the first connection is used to indicate an increase speed of the transmit power of the terminal device on the first connection, for example, may be represented by an increment of the transmit power of the terminal device on the first connection in a specified time period. The specified time period may be a period of time, such as 1 millisecond (millisecond, ms), or 10 ms, or may be one or more time units specified in the 3rd Generation Partnership Project (3rd generation partnership project, 3GPP) protocol, such as one full slot (full slot), two short slots (short slot, also referred to as mini slot, mini slot), or one radio frame (radio frame).

The RSRP threshold, the RSRQ threshold, the RSSI threshold, the falling slope threshold, and the rising slope threshold may be set according to an actual requirement or a protocol specification. Details are not described herein.

In this application, when the foregoing preset condition is met, it is considered that quality of service of the terminal device on the first connection deteriorates, and the first connection cannot meet a transmission requirement of an uplink service. In this case, a split bearer of the uplink service needs to be started, that is, the following step is performed:

S302: The terminal device increases an amount of data to be transmitted on a second connection while decreasing an amount of data to be transmitted on the first connection.

In a possible design method, that the terminal device increases an amount of data to be transmitted on a second connection while decreasing an amount of data to be transmitted on the first connection may include the following step:

If the terminal device determines that a data amount of to-be-transmitted data is less than or equal to a data amount threshold, the terminal device transmits all the to-be-transmitted data on the second connection.

For example, with reference to FIG. 1 and FIG. 4, when the terminal device starts the split bearer, the first connection is an uplink connection to the secondary node, and includes the NR PDCP entity, the NR RLC entity, the NR MAC entity, and the NR PHY entity; and the second connection is an uplink connection to the main node, and includes the NR PDCP entity, the E-UTRA RLC entity, the E-UTRA MAC entity, and the E-UTRA PHY entity. If the terminal device determines that the first connection meets the preset condition and that the second connection can carry all uplink data originally to be carried by the first connection, the terminal device may transmit, on the second connection, all uplink data originally to be transmitted on the first connection.

In an actual application, the to-be-transmitted data may include first to-be-transmitted data and second to-be-transmitted data. Therefore, in another possible design method, that the terminal device increases an amount of data to be transmitted on a second connection while decreasing an amount of data to be transmitted on the first connection may include the following step:

If the terminal device determines that the data amount of the to-be-transmitted data is greater than the data amount threshold, the terminal device transmits the second to-be-transmitted data on the second connection while transmitting the first to-be-transmitted data on the first connection.

Optionally, a data amount of the second to-be-transmitted data may be less than or equal to the data amount threshold. The data amount threshold may be determined by the terminal device based on a bearer capability of the second connection. For example, the data amount threshold may be determined based on a maximum amount of uplink data that can be carried by the second connection. Therefore, the data amount threshold may be equal to the maximum amount of data that can be carried by the second connection. Optionally, the data amount threshold may alternatively be less than the maximum amount of data that can be carried by the second connection, for example, may be 90% or 80% of the maximum uplink data amount, so that resources are reserved for the terminal device to transmit signaling on the second connection.

It should be noted that the first connection and the second connection are merely examples. It is easy to understand that, if the terminal device determines that the second connection meets the preset condition and the terminal device determines that a channel state on the first connection is good, the terminal device may also transfer a part or all of the uplink data originally to be transmitted on the second connection to the first connection for transmission. For a specific implementation, refer to S301 and S302. Details are not described herein again.

In addition, the data transmission method shown in FIG. 3 is described by using a communications system based on an EN-DC option 3X dual-connectivity architecture with non-standalone networking as an example. Actually, the data transmission method shown in FIG. 3 may also be applicable to another dual-connectivity or multi-connectivity communications system based on a non-standalone networking architecture, for example, a dual-connectivity communications system based on an EN-DC option 3 architecture. This is not limited in this embodiment of this application.

According to the data transmission method provided in this embodiment of this application, when the signal strength received by the terminal device on the first connection is less than the strength threshold, or the transmit power of the terminal device on the first connection is greater than or equal to the power threshold, the terminal device can increase the amount of data to be transmitted on the second connection while decreasing the amount of data to be transmitted on the first connection. To be specific, the terminal device can dynamically adjust, based on radio channel quality or transmit power on the two connections, the amounts of data to be transmitted on the two connections. Therefore, a problem that poor radio channel quality on one connection causes poor uplink communication quality on the connection can be avoided, a bit error rate of uplink data can be reduced, and reliability and efficiency of uplink communication in a dual-connectivity communications system based on a non-standalone networking architecture are improved. In addition, a quantity of uplink retransmission times can be reduced, uplink transmit power is reduced, and power consumption of the terminal device is reduced.

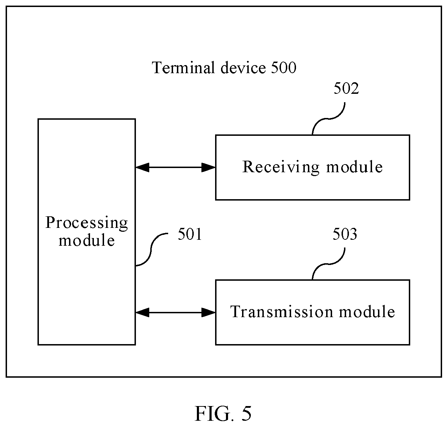

The data transmission method in the embodiment of this application is described above in detail with reference to FIG. 3 and FIG. 4. With reference to FIG. 5, the following further describes a terminal device that can perform the data transmission method described in the method embodiment of this application.

FIG. 5 is another terminal device according to an embodiment of this application, configured to perform the data transmission method shown in FIG. 3. As shown in FIG. 5, the terminal device 500 includes a processing module 501, a receiving module 502, and a transmission module 503.

The processing module 501 is configured to determine that a first connection meets a preset condition. The preset condition includes one or more of the following: Signal strength received by the receiving module 502 on the first connection is less than a strength threshold; and transmit power of the transmission module 503 on the first connection is greater than or equal to a power threshold.

The processing module 501 is further configured to control the transmission module 503 to increase an amount of data to be transmitted on a second connection while controlling the transmission module 503 to decrease an amount of data to be transmitted on the first connection.

For example, that signal strength received by the receiving module 502 on the first connection is less than a strength threshold may include one or more of the following:

Reference signal received power RSRP received by the receiving module 502 on the first connection is less than an RSRP threshold;
reference signal received quality RSRQ received by the receiving module 502 on the first connection is less than an RSRQ threshold; and
a received signal strength indicator RSSI received by the receiving module 502 on the first connection is less than an RSSI threshold.

Optionally, the preset condition may further include one or more of the following:

A falling slope of the signal strength received by the receiving module 502 on the first connection is greater than a falling slope threshold; and
a rising slope of the transmit power of the transmission module 503 on the first connection is greater than a rising slope threshold.

In a possible design, if determining that a data amount of to-be-transmitted data is less than or equal to a data amount threshold, the processing module 501 is further configured to control the transmission module 503 to transmit all the to-be-transmitted data on the second connection.

In an actual application, the to-be-transmitted data may include first to-be-transmitted data and second to-be-transmitted data. Therefore, in another possible design, if determining that the data amount of the to-be-transmitted data is greater than the data amount threshold, the processing module 501 is further configured to control the transmission module 503 to transmit the second to-be-transmitted data on the second connection while controlling the transmission module 503 to transmit the first to-be-transmitted data on the first connection.

Optionally, a data amount of the second to-be-transmitted data may be less than or equal to the data amount threshold. The terminal device may determine the data amount threshold based on a bearer capability of the second connection. It is easy to understand that the data amount threshold may be equal to a maximum amount of data that can be carried by the second connection. Optionally, the data amount threshold may alternatively be less than a maximum amount of data that can be carried by the second connection, so that resources are reserved for the terminal device to transmit signaling on the second connection.

It should be noted that the terminal device 500 may be the terminal device shown in FIG. 1, or may be a chip or a system on chip disposed in the terminal device shown in FIG. 1. This is not limited in this embodiment of this application.

It should be noted that when the terminal device 500 is a chip or a system on chip disposed in the terminal device shown in FIG. 1, the processing module 501 may be a processor disposed in the chip or the system on chip, the receiving module 502 may be an input circuit or interface of the chip or the system on chip, and the transmission module 503 may be an output circuit or interface of the chip or the system on chip. Optionally, the processing module 501, the receiving module 502, and the transmission module 503 may be connected to each other by using a bus in the chip or the system on chip. Optionally, the terminal device 500 may further include a storage module (not shown in FIG. 5). The storage module may be a memory in the chip or the system on chip, or may be a memory that is located in the terminal device, is independent of the chip or the system on chip, and is connected to the input/output interface or circuit of the chip or the system on chip.

An embodiment of this application provides a communications system. The communications system may include the foregoing terminal device and a network device.

An embodiment of this application provides a computer-readable storage medium. The computer storage medium stores a computer-readable instruction, and when a computer reads and executes the computer-readable instruction, the computer is enabled to perform the data transmission method in the foregoing method embodiment.

An embodiment of this application provides a computer program. When the computer program is executed on a computer, the computer is enabled to implement the data transmission method in the foregoing method embodiment.

It should be understood that, the processor in the embodiments of this application may be a central processing unit (central processing unit, CPU), or may further be another general-purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memory (random access memory, RAM) RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or some of the foregoing embodiments may be implemented by using software, hardware (for example, circuit), firmware, or any combination thereof. When software is used to implement the embodiments, the foregoing embodiments may be implemented completely or partially in a form of a computer program product. The computer program product includes one or more computer instructions or computer programs. When the program instructions or the computer programs are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this embodiment of this application is merely used to describe an association relationship between associated objects, and indicates that there may be three relationships. For example, A and/or B may indicate that only A exists, both A and B exist, and only B exists, where A and B may be singular or plural. In addition, the character "/" in this specification generally indicates an "or" relationship between the associated objects, but may also indicate an "and/or" relationship, which may be specifically understood with reference to the context.

In the embodiments of this application, the term "at least one" indicates one or more, and the term "a plurality of' indicates two or more. The term "at least one of the following items (pieces)" or an expression similar to the term indicates any combination of the items, and includes a single item (piece) or any combination of a plurality of items (pieces). For example, at least one item (piece) of a, b, or c may indicate: a, b, c, a-b, a-c, b-c, or a-b-c, where a, b, and c may be in a singular or plural form.

In the embodiments of this application, "first" and "second" are used to distinguish different objects, or are used to distinguish different processing on a same object, but are not used to describe a specific order of objects.

In the embodiments of this application, "include" and "have" and any variation thereof are intended to cover a non-exclusive inclusion. For example, a process, a method, a system, a product, or a device that includes a series of steps or units is not limited to listed steps or units, but in some embodiments further includes other steps or units that are not listed, or in some embodiments, other steps or units inherent to these processes, methods, products, or devices are further included.

In addition, in the embodiments of this application, the word "example" or "for example" is used to represent giving an example, an illustration, or a description. Any embodiment or design scheme described as an "example" or "for example" in the embodiments of this application should not be explained as being more preferred or having more advantages than another embodiment or design scheme. Exactly, use of the word "example" or "for example" or the like is intended to present a relative concept in a specific manner.

In the embodiments of this application, "information (information)", "signal (signal)", "message (message)", "channel (channel)", "signaling (signaling)", and "message (message)" may sometimes be used together. It should be noted that the meanings to be expressed are consistent without emphasizing their distinctions. The terms "of", "corresponding, relevant (corresponding, relevant)", and "corresponding (corresponding)" may sometimes be used together. It should be noted that the meanings to be expressed are consistent without emphasizing their distinctions.

In the embodiments of this application, sometimes a subscript such as W₁ may be presented in a non-subscript form such as W1 by mistake. When a difference between the forms is not emphasized, meanings to be expressed by the forms are consistent.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system and unit, reference may be made to a corresponding process in the foregoing method embodiments, and details are not described herein again.

In the several embodiments provided in this application, it should be understood that the disclosed system and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the data transmission method comprises:
determining, by a terminal device, that a first connection meets a preset condition, wherein the preset condition comprises one or more of the following: a signal received by the terminal device on the first connection is less than a signal threshold; and transmit power of the terminal device on the first connection is greater than or equal to a power threshold; and
increasing, by the terminal device, an amount of data to be transmitted on a second connection while decreasing an amount of data to be transmitted on the first connection.

2. The data transmission method according to claim 1, wherein that signal strength received by the terminal device on the first connection is less than a strength threshold comprises one or more of the following:
reference signal received power RSRP received by the terminal device on the first connection is less than an RSRP threshold;
reference signal received quality RSRQ received by the terminal device on the first connection is less than an RSRQ threshold; and
a received signal strength indicator RSSI received by the terminal device on the first connection is less than an RSSI threshold.

3. The data transmission method according to claim 1 or 2, wherein the preset condition further comprises one or more of the following:
a falling slope of the signal strength received by the terminal device on the first connection is greater than a falling slope threshold; and
a rising slope of the transmit power of the terminal device on the first connection is greater than a rising slope threshold.

4. The data transmission method according to any one of claims 1 to 3, wherein the increasing, by the terminal device, an amount of data to be transmitted on a second connection while decreasing an amount of data to be transmitted on the first connection comprises:
if the terminal device determines that a data amount of to-be-transmitted data is less than or equal to a data amount threshold, transmitting, by the terminal device, all the to-be-transmitted data on the second connection.

5. The data transmission method according to claim 4, wherein the to-be-transmitted data comprises first to-be-transmitted data and second to-be-transmitted data; and
the increasing, by the terminal device, an amount of data to be transmitted on a second connection while decreasing an amount of data to be transmitted on the first connection comprises:
if the terminal device determines that the data amount of the to-be-transmitted data is greater than or equal to the data amount threshold, transmitting, by the terminal device, the second to-be-transmitted data on the second connection while transmitting the first to-be-transmitted data on the first connection.

6. The data transmission method according to claim 5, wherein a data amount of the second to-be-transmitted data is less than or equal to the data amount threshold.

7. The data transmission method according to any one of claims 4 to 6, wherein the data amount threshold is determined by the terminal device based on a bearer capability of the second connection.

8. A terminal device, wherein the terminal device comprises a processing module, a receiving module, and a transmission module, wherein
the processing module is configured to determine that a first connection meets a preset condition, wherein the preset condition comprises one or more of the following: signal strength received by the receiving module on the first connection is less than a strength threshold; and transmit power of the transmission module on the first connection is greater than or equal to a power threshold; and
the processing module is further configured to increase an amount of data to be transmitted on a second connection while decreasing an amount of data to be transmitted on the first connection.

9. The terminal device according to claim 8, wherein that signal strength received by the receiving module on the first connection is less than a strength threshold comprises one or more of the following:
reference signal received power RSRP received by the receiving module on the first connection is less than an RSRP threshold;
reference signal received quality RSRQ received by the receiving module on the first connection is less than an RSRQ threshold; and
a received signal strength indicator RSSI received by the receiving module on the first connection is less than an RSSI threshold.

10. The terminal device according to claim 8 or 9, wherein the preset condition further comprises one or more of the following:
a falling slope of the signal strength received by the receiving module on the first connection is greater than a falling slope threshold; and
a rising slope of the transmit power of the receiving module on the first connection is greater than a rising slope threshold.

11. The terminal device according to any one of claims 8 to 10, wherein
if determining that a data amount of to-be-transmitted data is less than or equal to a data amount threshold, the processing module is further configured to control the transmission module to transmit all the to-be-transmitted data on the second connection.

12. The terminal device according to claim 11, wherein the to-be-transmitted data comprises first to-be-transmitted data and second to-be-transmitted data; and
if determining that the data amount of the to-be-transmitted data is greater than the data amount threshold, the processing module is further configured to control the transmission module to transmit the second to-be-transmitted data on the second connection while transmitting the first to-be-transmitted data on the first connection.

13. The terminal device according to claim 12, wherein a data amount of the second to-be-transmitted data is less than or equal to the data amount threshold.

14. The terminal device according to any one of claims 11 to 13, wherein the processing module is further configured to determine the data amount threshold based on a bearer capability of the second connection.

15. A terminal device, wherein the terminal device comprises a processor and a memory, wherein
the memory is configured to store an instruction; and
the processor is configured to invoke and execute the instruction in the memory, so that the terminal device performs the data transmission method according to any one of claims 1 to 7.

16. A terminal device, wherein the terminal device comprises a processor, a memory, and a transceiver, wherein
the transceiver is configured to receive and transmit data;
the memory is configured to store an instruction; and
the processor is configured to invoke and execute the instruction in the memory, so that the terminal device performs the data transmission method according to any one of claims 1 to 7.

17. A terminal device, wherein the terminal device is configured to perform the data transmission method according to any one of claims 1 to 7.

18. A computer-readable storage medium, wherein the computer storage medium stores a computer-readable instruction, and when a computer reads and executes the computer-readable instruction, the computer is enabled to perform the data transmission method according to any one of claims 1 to 7.

19. A computer program, wherein when the computer program is executed on a computer, the computer is enabled to implement the data transmission method according to any one of claims 1 to 7.
